Europäisches Patentamt

**European Patent Office**

**Office européen des brevets**

(19)

(11) Numéro de publication: **0 041 011**
A1

# (12) DEMANDE DE BREVET EUROPEEN

(21) Numéro de dépôt: **81400784.5**

(22) Date de dépôt: **19.05.81**

(51) Int. Cl.³: **F 03 D 9/00**, F 03 B 17/06

(30) Priorité: **23.05.80 FR 8011498**

(43) Date de publication de la demande: **02.12.81**
**Bulletin 81/48**

(84) Etats contractants désignés: **BE CH DE IT LI NL SE**

(71) Demandeur: **Foa, Michel, 21, rue André Sabatier,**
**F-92000 Nanterre (FR)**

(72) Inventeur: **Foa, Michel, 21, rue André Sabatier,**
**F-92000 Nanterre (FR)**

(74) Mandataire: **Dejoux, André, 15, rue Lakanal,**
**F-75015 Paris (FR)**

(54) **Convertisseur d'énergie cinétique de fluides en énergie électrique ou mécanique.**

(57) Le convertisseur d'énergie fluidique en énergie électrique est constitué par une éolienne à bulbes à axe vertical accouplée en direct sur l'arbre d'entrée d'une génératrice de courant electrique à basse vitesse de rotation.

Pour permettre le démarrage de la génératrice à faible vitesse du vent malgré un couple résistant important, on ajuste la courbe de puissance de la génératrice sur celle de l'arbre récepteur de l'éolienne au moyen d'une résistance de charge variant soit progressivement, soit par paliers successifs depuis le moment ou le couple de démarrage est atteint jusqu'à la puissance maximale. La charge est alimenté par l'intermédiaire d'un détecteur de variation de la tension de sortie de ladite génératrice agissant sur un moyen de commande électronique ou électromécanique de variation de puissance.

Convertisseur d'énergie fluidique en énergie électrique ou mécanique, comportant un récepteur mécanique constitué par une éolienne constituée par au moins trois bulbes hémisphériques disposés sur un même plan et fixés chacun sur une tige métallique support solidaire d'un arbre récepteur et coopérant avec une génératrice de courant électrique.

On connait un convertisseur de ce type décrit dans le brevet français n° 78 26938. Ce convertisseur éolien à bulbes à axe vertical est accouplé à une génératrice de courant électrique par l'intermédiaire d'un multiplicateur de vitesse du fait que la vitesse de rotation de ce type d'éolienne est faible comparativement aux éoliennes à axe horizontal.
Il en résulte une opération d'entretien supplémentaire et un accroîssement du coût.

La présente invention a pour but de pallier ces inconvénients. L'invention telle qu'elle est caractérisée dans les revendications résoud le problème consistant à supprimer le multiplicateur de vitesse attaquant l'arbre d'entrée de la génératrice en accouplant directement celui-ci sur l'arbre récepteur de l'éolienne. Du fait de la faible vitesse de rotation, le couple résistant de la génératrice est élevé et nécessite normalement un couple de démarrage important . Pour pallier cet inconvénient, la courbe de puissance de la génératrice est ajustée par un moyen annexe électromécanique ou electronique agissant par rapport à la courbe couple-vitesse de l'arbre récepteur de façon progressive ou par paliers successifs depuis le couple de démarrage jusqu'à la puissance maximale de ladite génératrice.

Les avantages obtenus grâce à cette invention sont les suivants:
- réduction notable du coût de revient et du coût d'entretien donc réduction de la durée d'amortissement par un faible coût du KW installé;
- accroîssement de la fiabilité par réduction de la quantité d'organes en mouvement et par la réduction importante de la vitesse de rotation de la génératrice. Il en résulte un allongement de la durée entre les opérations d'entretien et une bien plus grande longévité.
- Fonctionnement assuré sans risque de détérioration même par tempète  par limitation de la puissance maximale;
-démarrage obtenu même à faible vitesse du vent;
- utilisation possible au fil de l'eau de façon analogue à un moulin à eau ou immergé le plan des bulbes parallèle au plan d'eau du fait de la faible vitesse nécessaire à la génératrice.

L'invention est décrite plus en détail dans la description qui suit, faite en référence aux dessins annexés dans lesquels :

- la figure 1 montre, vu en coupe en élévation, un exemple de couplage direct selon l'invention d'une éolienne à bulbe avec une génératrice électrique,

- la figure 2 montre un exemple de convertisseur selon l'invention immergé parallèlement au plan d'eau,

- la figure 3 montre un exemple d'éolienne utilisée en moulin à eau,

- la figure 4 montre l'éolienne de la fig.3 en vue de dessus,

- la figure 5 montre les courbes de variation progressive et par paliers de la puissance de la génératrice,

- la figure 6 montre un exemple de schéma électronique de commande de variation progressive de puissance pour une génératrice monophasée,

- les figures 7 et 8 montrent 2 exemples de commande de variation progressive de la puissance pour des génératrices à courant continu,

- la figure 9 représente un exemple de variation de puissance par paliers pour une machine à courant monophasé,

- les figures 10 et 11 montrent schématiquement des exemples de connection de résistances de charge,

- la figure 12 montre un exemple de schéma de commande de variation progressive de la puissance au moyen de résistances de charge non linéaires.

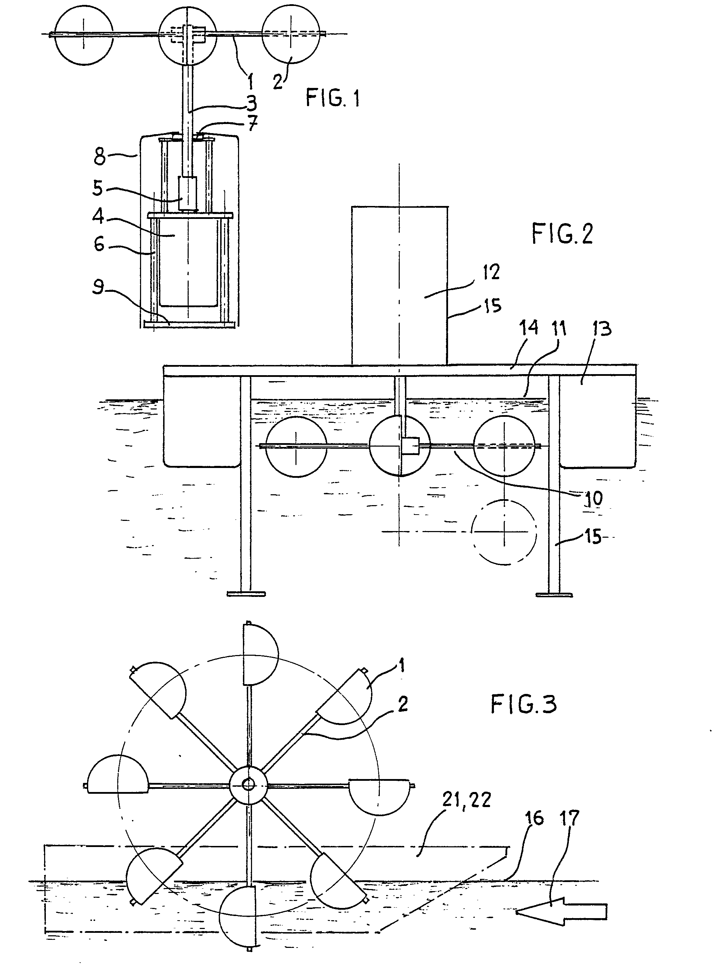

La figure 1 montre un exemple d'accouplement direct d'une éolienne à bulbes 1 montés sur les tiges supports 2 rendues solidaires de l'arbre récepteur 3 lequel est accouplé directement sur la génératrice 4 au moyen d'un manchon rigide 5. L'arbre 3 est maintenu sur le bâti 6 par le roulement à billes 7. Un capot étanche 8 protège la génératrice des intempéries. La semelle 9 est fixée au sommet d'un poteau.

La figure 2 montre un exemple d'éolienne à bulbes 10 immergée parallèlement au plan d'eau 11. L'arbre récepteur se trouve disposé verticalement vers le haut et accouplé à la génératrice électrique 12, rendue solidaire d'un flotteur 13 par un châssis rigide 14 sur lequel est fixé un capotage 15. Le châssis 14 comporte les pieds 15 prévus pour éviter que les bulbes frottent sur le fond de la rivière lors d'une importante baisse de niveau.

La figure 3 représente schématiquement une éolienne à bulbes utilisée en moulin à eau accouplée ou non à une génératrice électrique. Les bulbes sont disposés sur un plan perpendiculaire au plan d'eau 16 et entraînés en rotation par le courant figu. par la flèche 17.

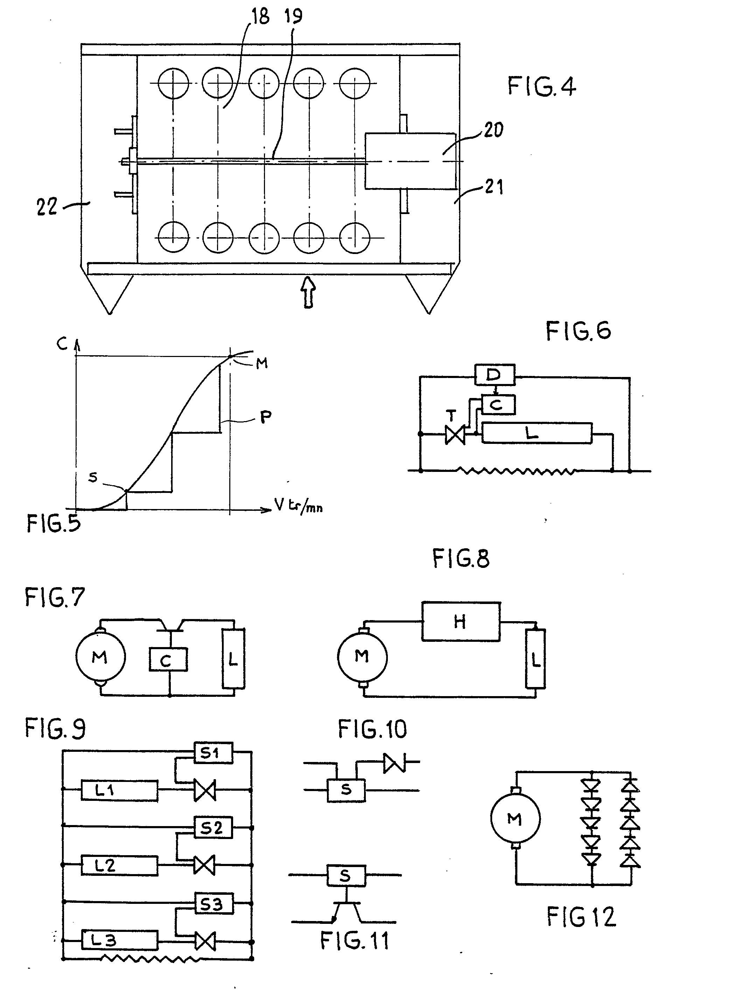

Sur la figure 4 on a représenté la vue de dessus montrant 5 rangées de bulbes 18 solidaires d'un même arbre récepteur 19 accouplé à la génératrice électrique 20 fixée sur un châssis solidaire des flotteurs 21,22 lesquels sont assujettis entre eux et ancrés au sol.

Les bulbes sont décalés de telle sorte qu'il y en a toujours au moins un qui reçoit la poussée de l'eau de façon à assurer la régularité du couple.

La figure 5 montre un exemple de courbe couple-vitesse d'une éolienne à bulbes. Le point S représente le seuil de démarrage de la génératrice qui a un couple résistant important. Le point M représente la puissance maximale de la génératrice. Pour pouvoir recueillir l'énergie du vent ou de l'eau à faible vitesse, on ajuste la courbe de puissance de la génératrice de courant électrique sur cette courbe au moyen d'une charge que l'on fait varier pour suivre cette courbe soit progressivement, soit par paliers (courbe P).

Au démarrage, au point S, la charge est faible, elle s'accroît au fur et à mesure de l'accroissement de la vitesse de rotation de l'arbre récepteur (courbe R).

Il existe de nombreux moyens connus pour faire varier cette puissance selon le type de génératrice, soit à courant continu, soit à courant alternatif mono ou polyphasé. On peut par exemple laisser l'éolienne tourner librement jusqu'au point S et accoupler la génératrice au moyen d'un coupleur centrifuge à poudre ou à masselottes ou encore à courant de foucault. On peut également utiliser un simple embrayage électromagnétique.

A partir du point S on peut utiliser un ensemble de résistances de charge connectées en tout-ou-rien par divers moyens connus de l'homme de l'art, sélectionnées en fonction des niveaux de tension de la génératrice de courant pour accroître la charge au fur et à mesure de la croissance des couple-vitesse de l'arbre récepteur.

La variation peut être obtenue selon la loi d'Ohm $I = \dfrac{U}{R}$ de la façon suivante :

      1 - Variation progressive de la tension U

        . Obtenue par déphasage :

            - machine à courant monophasé (fig.6)

- machine à courant polyphasé

. Obtenue par hacheur de courant (fig.8)

. Obtenue par transistors ou composants similaires (fig.7)

- machine à courant continu

2 - Variation de la puissance par paliers successifs

. Obtenue par la mise en circuit ou hors circuit
séquentielle des résistances de charge

- machines monophasées, polyphasées ou à courant
continu (fig.9,10 et 11).

La mise en circuit des charges peut être effectuée de façon électromécanique à partir d'un détecteur de variation de la tension de sortie aux bornes de la génératrice alimentant un programmateur électronique statique ou électromécanique relayant l'alimentation des charges. On a montré sur la figure 6 un exemple de schéma électronique de commande de variation progressive de la puissance d'une génératrice de courant monophasé par déphasage, dans lequel le détecteur D de variation de la tension aux bornes de la génératrice attaque un conformateur C qui transforme la tension alternative en impulsions attaquant la "gachette" du triac T ou de 2 thyristors.Pour une machine polyphasée, il suffit de répéter le même schéma pour chacune des phases, un seul détecteur D suffit.

La figure 7 montre un exemple de schéma de génératricé à courant continu dans lequel la variation progressive de la puissance est obtenue par un ou plusieurs thyristors

La figure 8 montre l'exemple d'un autre schéma de commande d'une génératrice à courant continu sur lequel la variation de la puissance est obtenue au moyen d'un hacheur de courant H.

La figure 9 montre un exemple de schéma de génératrice de courant alternatif monophasé à variation de puissance par paliers.
Il comporte,selon l'invention , les charges L1, L2, L3, les seuils de niveaux de tension S1,S2,S3, définissant trois paliers de puissance et attaquant "la gachette" de triacs ou thyristors ou tout autre moyen susceptible d'assurer la connection des charges tels que par exemple le contacteur statique de la figure 10 ou celui de la figure 11 bien connus de l'homme de l'art.
On peut également effectuer la mise en circuit des charges au moyen d'un programmateur électromécanique alimenté par un détecteur de variation de la tension de sortie aux bornes de la génératrice comportant trois seuils

0041011

définissant les paliers de puissance.

Sur la figure 12, on a représenté un schéma simplifié d'une génératrice dont la puissance est adaptée par un ensemble de charges "non linéaires" constituées par exemple par une série de diodes au silicium dont les pertes calorifiques constituent l'énergie disponible utilisable par exemple pour chauffer un fluide caloporteur.

Ces divers blocs électroniques de variation de puissance sont prévues en cas de tempête, pour éviter le dépassement de la puissance maximale de la génératrice en faisant varier dégressivement la résistance de charge en rapport avec la croissance de la vitesse de l'arbre récepteur de l'éolienne.

- 1 -                                    0041011

REVENDICATIONS :

1 - Convertisseur d'énergie cinétique de fluide en énergie électrique ou mécanique constitué d'une éolienne à axe vertical comportant au moins trois bulbes hémisphériques disposés sur au moins un étage, fixés chacun sur un bras support solidaire d'un arbre récepteur accouplé directement sur l'arbre d'entraînement d'une .génératrice de courant électrique, caractérisé en ce que la génératrice de courant électrique produit du courant ·monophasé, polyphasé ou continu à basse vitesse de rotation, et en ce que sa courbe de puissance est ajustée par un moyen annexe agissant par rapport à la courbe de couple-vitesse de l'arbre récepteur par paliers successifs depuis couple de démarrage à faible vitesse jusqu'à la puissance maximale de ladite génératrice.

2 - Convertisseur selon 1, dans lequel l'énergie cinétique est produite par un fluide liquide, caractérisé en ce que le plan de rotation des bulbes est immergé parallèlement au plan d'eau, l'arbre récepteur vertical est accouplé hors de l'eau sur une génératrice électrique ou sur un récepteur mécanique, et en ce que l'ensemble est assujetti à un flotteur maintenu immobile dans le courant par ancrage sur la rive, et en ce que le flotteur est équipé de pieds libres définissant une hauteur minimale par rapport au fond de la rivière en cas de baisse importante de niveau.

3 - Convertisseur selon 1 dans lequel l'axe de l'éolienne est disposé horizontalement par rapport au plan d'eau, caractérisé en ce qu'il comporte plusieurs rangées de bulbes disposées de façon décalée pour avoir toujours au moins un bulbe immergé pour assurer la régularité du couple moteur sur l'arbre récepteur.

4 - Convertisseur selon 1, caractérisé en ce que le moyen annexe d'ajustement de la courbe de puissance de la génératrice est constitué par un ensemble de résistances de charge coopérant avec des moyens électroniques pour faire varier la puissance  ou pour faire varier la résistance de charge par paliers successifs.

5 - Convertisseur selon 1 et 4, caractérisé en ce que la génératrice est une machine à courant continu dont le moyen pour faire varier la puissance est un ensemble de transistors ou de composants similaires.

6 - Convertisseur selon 1 et 4, caractérisé en ce que le moyen pour faire varier la puissance des génératrices de courant alternatif monophasé ou triphasé est un bloc électronique faisant varier la tension des résistances à partir d'un détecteur de variation de la tension de sortie aux bornes de la génératrice.

7 - Convertisseur selon 1 et 4, caractérisé en ce que le moyen pour faire varier par paliers la résistance de charge des génératrices de courant alternatif monophasé ou polyphasé est soit un bloc électronique de mise en circuit des charges alimenté par un détecteur de seuil contrôlant la variation de la tension de sortie de la génératrice, soit un régulateur électronique alimenté par le détecteur de variations de la tension de sortie aux bornes de la génératrice.

8 - Convertisseur selon 1 et 4, caractérisé en ce que les résistances de charge sont d'un type non linéaire dont les pertes calorifiques constituent l'énergie disponible.

9 - Convertisseur selon l'une quelconque des revendications précédentes 1,4 et 8, caractérisé en ce qu'en cas de tempête le dépassement de la puissance est évité au moyen du bloc électronique et/ou électromécanique de commande de variation de la puissance agissant pour faire varier dégressivement la puissance de la génératrice par réduction de la résistance de charge en rapport avec la croissance de la vitesse sur l'arbre récepteur de l'éolienne.

0041011

FIG. 1

FIG.2

FIG.3

FIG.4

18  19

20

21

22

FIG.6

FIG.5

C

M

P

S

V tr/mn

D

C

T

L

FIG.7

FIG.8

M

C

L

M

H

L

FIG.9

FIG.10

S1

L1

S2

L2

S3

L3

S

S

FIG.11

M

FIG 12

0041011

| Office européen des brevets | RAPPORT DE RECHERCHE EUROPEENNE | Numéro de la demande EP 81 40 0784 |

## DOCUMENTS CONSIDERES COMME PERTINENTS

| Catégorie | Citation du document avec indication, en cas de besoin, des parties pertinentes | Revendication concernée |
|---|---|---|
| | US - A - 4 200 833 (WILKERSON)<br>* Colonne 3, ligne 6 - colonne 8, ligne 16 * | 1,4,5 |
| | US - A - 2 579 311 (FAIREY)<br>* Colonne 3, ligne 55 - colonne 4, ligne 15 * | 1,4 |
| | CH - A - 437 490 (B.B.C.)<br>* Colonne 4, ligne 11 - colonne 8, ligne 3 * | 1 |
| | BE - A - 669 697 (BOIN)<br>* Page 4 * | 2 |
| | DE - A - 2 446 980 (WEINECK)<br>* Page 1, paragraphe 5 * | 3 |
| A | FR - E - 2 266 006 (CLAUSIN) | |
| A | US - A - 3 942 025 (ZAISUIRI) | |
| A | FR - A - 2 384 963 (VOUKOURAKOS) | |
| A | FR - A - 1 460 787 (HONEYWELL) | |
| AD | FR - A - 2 436 890 (FOA) | |

**CLASSEMENT DE LA DEMANDE (Int. Cl.³)**

F 03 D 9/00
F 03 B 17/06

**DOMAINES TECHNIQUES RECHERCHES (Int. Cl.³)**

F 03 D
F 03 B
G 05 F

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche La Haye | Date d'achèvement de la recherche 29-07-1981 | Examinateur DAVID |

OEB Form 1503.1 06.78